# EUROPÄISCHE PATENTANMELDUNG

(11) **EP 0 635 629 A1**
(43) Veröffentlichungstag der Anmeldung: **25.01.1995**
(21) Anmeldenummer: 93111692.5
(22) Anmeldetag: 21.07.1993
(51) Int. Cl.: F02D 21/08

(54) **Verfahren zur Diagnose eines Abgasrückführungssystems einer Brennkraftmaschine**

(71) Anmelder: SIEMENS AKTIENGESELLSCHAFT, D-80333 München (DE)
(72) Erfinder: Wier, Manfred, Dr.-Ing., D-93173 Wenzenbach (DE); Bayerle, Klaus, Dipl.-Ing. (FH), D-93051 Regensburg (DE); Pfleger, Hartmut, Dipl.-Ing., D-93049 Regensburg (DE)

(57) **Zusammenfassung**

Während des stabilen Leerlaufbetriebs wird das Abgasrückführventil für eine bestimmte Diagnosezeit mit einem Diagnosetastverhältnis angesteuert und dabei die Reaktion auf den Motorbetriebsparameter Drehzahl ausgewertet.

## Beschreibung

Die Erfindung betrifft ein Diagnoseverfahren für ein Abgasrückführungssystems einer Brennkraftmaschine gemäß dem Oberbegriff von Patentanspruch 1.

Die Abgasrückführung ist ein bekanntes und häufig angewandtes Mittel zur Absenkung der Stickoxid-Emission bei Brennkraftmaschinen. Da das Abgas des Motors in seinen wesentlichen Bestandteilen ein Inertgas ist, kann durch Zumischen von Abgas zum Luft-Kraftstoffgemisch die Verbrennungsspitzentemperatur gesenkt und damit der NO_{X}-Ausstoß reduziert werden. Die Menge des rückgeführten Abgases wird bei äußerer Abgasrückführung durch ein den Öffnungsquerschnitt eines Ruckführkanals beinflußendes, elektrisches oder pneumatisches Abgasrückführventil gesteuert oder geregelt.
Außerdem kann durch den Einsatz der Abgasrückführung der Kraftstoffverbrauch gesenkt werden.

Um die von den Gesetzgebern geforderten Abgasgrenzwerte einzuhalten, ist es notwendig, die Fahrzeuge mit Diagnoseeinrichtungen auszustatten, die es ermöglichen die Fehlfunktionen von Sensoren oder Systemen die sich mit der Steuerung oder Betätigung abgasrelevanter Teile verbunden sind, zu erfassen und entsprechende Fehlmeldungen ausgeben.

In der JP-A-6251746 ist eine Anordnung beschrieben, um die Betriebsweise eines Abgasrückführsystems zu überwachen und dessen Betriebsweise zu diagnostizieren. In dieser Anordnung wird ein Ventil, das den Abgasstrom vom Abgasrohr zum Einlaßsystem steuert, vorübergehend geschlossen und der Ansaugdruck, der während dieser Zeitdauer erfaßt wird, wird mit dem Druck verglichen, der erfaßt wird, während das Ventil geöffnet ist. Diese Werte werden verwendet, um einen Druckdifferenzwert abzuleiten. Wenn dies Druckdifferenz eine vorbestimmte Beziehung mit einem vorbestimmten Standardwert zeigt, wird die Arbeitsweise des Ventils als normal eingeschätzt.

Der Erfindung liegt die Aufgabe zugrunde, ein Diagnoseverfahren anzugeben, das auf einfache Weise ohne zusätzliche Sensoren zu benötigen, eine Überprüfung des Abgasrückführsystems einer Brennkraftmaschine ermöglicht.

Diese Aufgabe wird gemäß den Merkmalen des Patentanspruches 1 gelöst. Vorteilhafte Weiterbildungen finden sich in den Unteransprüchen.

Der Erfindung liegt die Erkenntnis zugrunde, daß durch Beimischung von Abgas zum Luft-/Kraftstoffgemisch dieses im Zylinder der Brennkraftmschine nicht mehr vollständig verbrennen kann, wodurch das auf die Kurbelwelle übertragene Drehmoment und damit bei gleichbleibender Last auch die Drehzahl abnimmt. Ist das Abgasrückführsystem in Ordnung, so muß bei Ansteuerung des Abgasrückführventils eine Drehzahlabnahme eintreten. Durch Differenzbildung der Drehzahl, die sich im stabilen Leerlaufbetrieb der Brennkraftmaschine vor Aktivieren des Abgasrückführventils einstellt und derjenigen Drehzahl, die sich bei Ansteuern mit einem Diagnosetastverhältnis ergibt und anschließenden Vergleich mit einem Diagnosegrenzwert ist es auf einfache Weise möglich, die Funktionsfähigkeit des Abgasrückführsystems zu überprüfen. Überschreitet diese Differenz den Grenzwert, so wird auf ein intaktes Abgasrückführsystem geschlossen, andernfalls wird eine Fehlermeldung ausgegeben.
Um etwaige Fehldiagnosen weitestgehend auszuschließen, ist es vorteilhaft, eine gewisse Anzahl von Überprüfungen hintereinander auszuführen und das Abgasrückführsystem erst als in Ordnung zu betrachten, wenn innerhalb dieser Überprüfungen eine vorgegebene Anzahl von positiven Ergebnissen erzielt wird.

Um Störungen der Drehzahl während der einzelnen Überprüfungen durch Lastaufschaltungen z.B. Klimaanlage oder Servolenkung auszuschalten, was die Auswertung der Drehzahländerung erschweren könnte, wird eine Bandbreite sowohl für die Drehzahl im Leerlauf als auch für den Leerlauffüllungssteller generiert, innerhalb der sich die Drehzahlwerte bewegen müssen, damit die einzelnen Überprüfungen gezählt werden können.

Die wählbare Anzahl von hintereinander durchzuführenden Überprüfungen müssen nicht zwangsläufig innerhalb ein- und derselben Leerlaufphase der Brennkraftmaschine liegen, sondern können auch auf mehrere Leerlaufphasen der Brennkraftmaschine verteilt sein. Dies hat den Vorteil, daß die Ergebnisse bereits abgelaufener Überprüfungen nicht verloren gehen, sondern bei der nächsten Diagnose mit einfließen.

Das Diagnosetastverhältnis, mit dem das Abgasrückführventil während der Diagnose angesteuert wird, ist im Vergleich zum Tastverhältnis bei aktiver Abgasrückführung im Teilastbereich der Brennkraftmaschine klein gewählt, d.h. der Öffnungsquerschnitt in der Abgasrückführungleitung nur gering erweitert und so wird eine plötzliche Änderung des Drehmomentes und damit eine unangenehme Ruckbewegung vermieden.

Ein Ausführungsbeispiel der Erfindung ist in der Zeichnung anhand zweier Figuren dargestellt und nachfolgend beschrieben. Es zeigen:
- Figur 1: in stark vereinfachter Weise ein Blockschaltbild einer Brennkraftmaschine mit einer Anordnung zur Durchführung des erfindungsgemäßen Diagnoseverfahrens und
- Figur 2: ein Ablaufdiagramm zur Durchführung des Diagnoseverfahrens für das Abgasrückführungssystem.

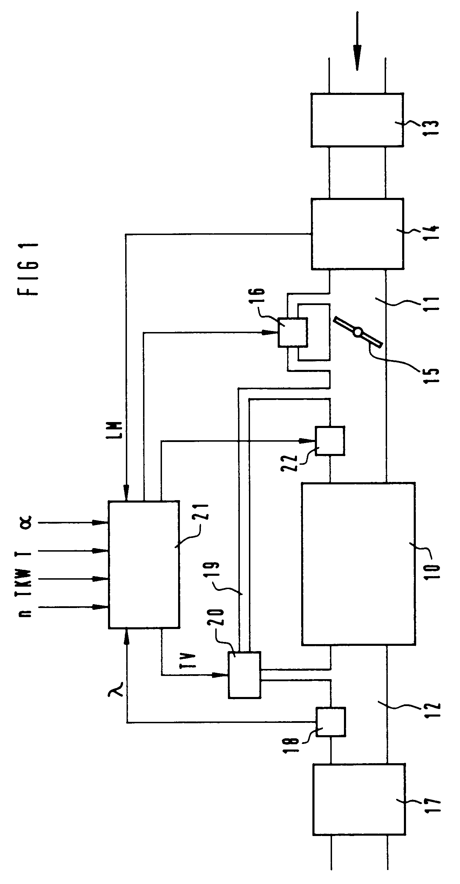

In Figur 1 ist mit 10 eine Brennkraftmaschine bezeichnet, die einen Ansaugkanal 11 und einen Abgas- oder Auspuffkanal 12 aufweist. Die zur Verbrennung notwendige Frischluft strömt durch ein Luftfilter 13, einen Luftmassenmesser 14 an einer Drosselklappe 15 vorbei in nicht dargestellte Zylinder der Brennkraftmaschine 10. Ein im Bereich der Drosselklappe 15 angeordneter Leerlauffüllungssteller 16 sorgt für das Aufrechterhalten der Leerlaufdrehzahl bei der jeweiligen Belastung. In dem Abgaskanal 12 ist in bekannter Weise ein Drei-Wege-Katalysator 17 zum Konvertieren der im Abgas enthaltenen Bestandteile HC, CO und NO_{X} geschaltet. An einer Stelle stromaufwärts des Katalysators 17 ist ein Abgassensor 18 in Form einer Lambda-Sonde zum Erfassen der Sauerstoffkonzentration im Abgas vorgesehen. Vom Abgaskanal 12 zweigt ein Abgasrückführungskanal 19 ab, der stromabwärts der Drosselklappe 15 in den Ansaugkanal 11 der Brennkraftmaschine 10 mündet. Zur Steuerung der vom Abgaskanal zum Ansaugkanal rückgeführten Abgasmenge ist in den Abgasrückführungskanal 19 ein Abgasrückführventil 20 eingeschaltet. In dem hier beschriebenen Ausführungsbeispiel handelt es sich dabei um ein elektrisch angetriebenes Ventil, dessen Öffnungsquerschnitt direkt durch Ansteuerung mit einer elektrischen Spannung mit variablem Tastverhältnis TV gesteuert und eingestellt werden kann. Anstelle eines rein elektrisch angetriebenen Abgasrückführungsventils 20 kann auch ein pneumatisches Ventil z.B. ein unterdruckbetätigtes Ventil, bei dem der Unterdruck mit Hilfe eines elektrisch angesteuerten Steuerventils moduliert wird, eingesetzt werden.

Der Luftmassenmesser 14, der Leerlauffüllungsteller 16, die Lambda-Sonde 18 und das Abgasrückführventil 20 sind elektrisch mit entsprechenden Eingängen/Ausgängen einer elektronischen Steuerungseinrichtung 21 verbunden. Dieser Steuerungseinrichtung werden mittels nicht dargestellter Geber bzw. Sensoren weitere, zum Steuern der Brennkraftmaschine notwendige Eingangsgrößen wie Maschinendrehzahl N, Kühlmitteltemperatur TKW, Frischlufttemperatur T, Drosselklappenwinkel α usw. zugeführt.

Bei dem hier in Figur 1 dargestellten luftmassengeführten Motorsteuerungssystem ermittelt ein in der elektronischen Steuerungeinrichtung 21 enthaltener Mikrocomputer abhängig von den Parametern Maschinendrehzahl N und Luftmasse LM eine, an den jeweiligen Lastzustand der Brennkraftmaschine angepaßte, zuzumessende Menge an Kraftstoff. Um die verschiedensten Betriebsbedingungen der Brennkraftmaschine, wie Startanreicherung, Warmlaufphase, Beschleunigungsanreicherung, Schubreduzierung usw. zu berücksichtigen, wird die so berechnete Kraftstoffgrundmenge noch mit entsprechenden Korrekturfaktoren bewertet und im Fall eines Einspritzsystems wird diese Kraftstoffmenge über Einspritzventile 22 zugemessen.

Zur Ermittlung der Kraftstoffmenge kann auch die Drehzahl der Brennkraftmaschine in Verbindung mit der ermittelten Luftmenge oder die Drehzahl in Verbindung mit dem Saugrohrdruck im Ansaugkanal herangezogen werden. Hierzu ist im ersten Fall an Stelle des Luftmassenmessers 14 ein Luftmengenmesser z.B. ein nach dem Stauklappenprinzip arbeitender Luftmengenmesser, im zweiten Fall ein Drucksensor für den Saugrohrdruck stromabwärts der Drosselklappe vorzusehen.

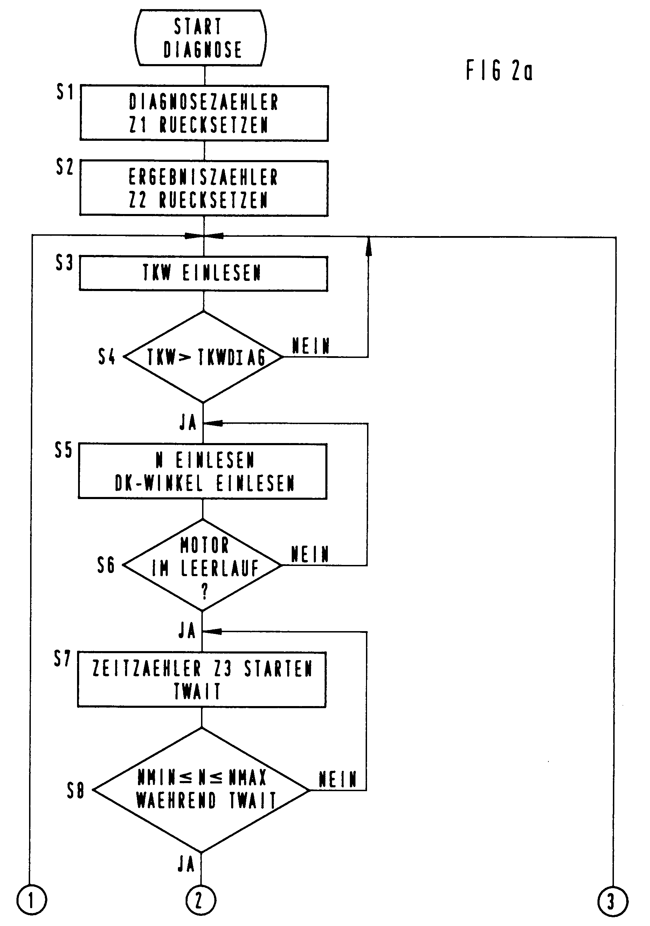

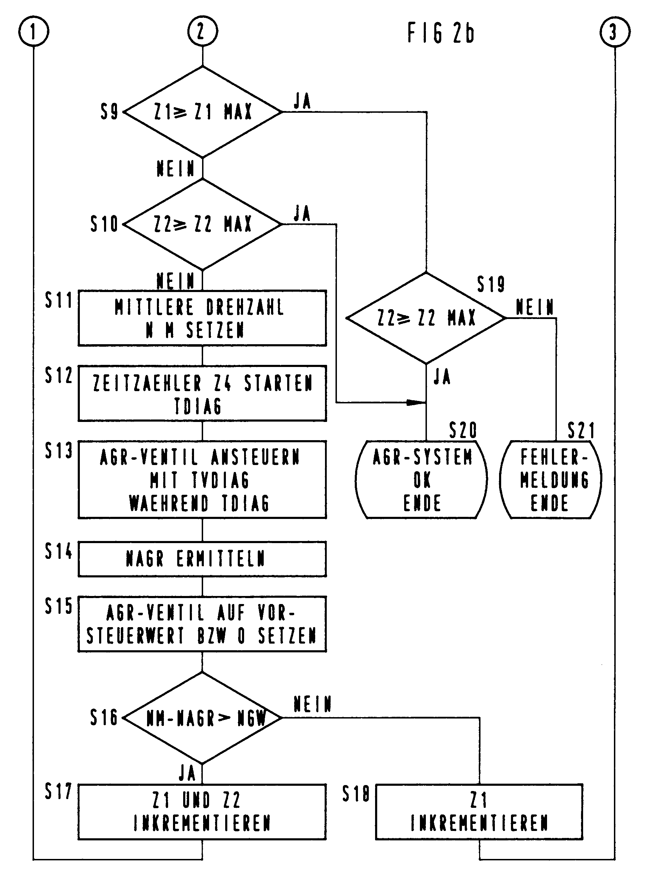

Das im folgenden anhand der Figur 2 erläuterte Diagnoseverfahren für das Abgasrückführungssystem der Brennkraftmaschine ist unabhängig von der Art der Lastermittlung.

Die Diagnose wird zweckmäßigerweise immer dann aufgerufen, wenn die Brennkraftmaschine gestartet wird.

Nach Aufruf der Diagnose wird in den Verfahrensschritten S1 und S2 sowohl ein Diagnosezähler Z1 als auch ein Ergebniszähler Z2 rückgesetzt. Der Diagnosezähler Z1 zählt die Anzahl der innerhalb eines Überprüfungszyklus hintereinander durchgeführten Diagnosen. Die Überprüfung des AbgasrückführungsSystems ist abgeschlossen, wenn eine frei vorgegebene Anzahl von Diagnosen, z.B. fünf Diagnosen, Z1MAX=5 unabhängig vom Ergebnis derselben durchlaufen sind. Der Ergebniszähler Z2 zählt nur diejenigen Diagnosen, die innerhalb der vorgegebenen Anzahl von Diagnosen zu einem positiven Ergebnis geführt haben. Der Maximalwert des Ergebniszählers, im folgenden als Z2MAX bezeichnet, ist ebenfalls innerhalb des Maximalwertes Z1MAX des Diagnosezählers Z1 frei wählbar. Führen z.B. von den durchgeführten fünf Diagnosen pro Überprüfungszyklus mindestens drei Diagnosen zu einem positiven Ergebnis, so wird auf ein intaktes Abgasrückführungssystem geschlossen. Dadurch kann der Einfluß einzelner, fehlerbehafteter Überprüfungen minimiert und die mögliche Gefahr einer Fehldiagnose reduziert werden.
Vor Freigabe der Diagnose muß abgewartet werden, bis die Brennkraftmaschine betriebswarm ist, d.h. die Kühlmitteltemperatur der Maschine einen vorgegebenen Schwellwert für die Abgasrückführdiagnose überschritten hat. Hierzu wird nach dem Start der Brennkraftmaschine im Verfahrensschritt S3 die Temperatur des Kühlmittels TKW mit Hilfe eines entweder in den Motorblock eingelassenen oder in den Kühlwasserkreislauf ragenden Temperaturfühlers erfaßt und in einen Arbeitsspeicher des Mikrocomputers eingelesen.
Im Verfahrensschritt S4 wird dann verglichen, ob diese aktuelle Kühlmitteltemperatur TKW höher ist als ein vorgegebener Diagnoseschwellwert TKWDIAG. Liegt die Kühlmitteltemperatur noch unterhalb dieses Diagnoseschwellwertes, so findet keine Überprüfung des AGR-Systems statt und die Schritte S3 und S4 werden wiederholt ausgeführt, bis die Abfrage im Verfahrensschritt S4 ein positives Ergebnis liefert.
In diesem Fall wird nun im Verfahrensschritt S5 sowohl die aktuelle Drehzahl der Brennkraftmaschine als auch die Stellung der Drosselklappe mittels geeigneter Sensoren erfaßt und ebenfalls in einen Arbeitsspeicher des Mikrocomputers eingelesen. Anschließend wird im Verfahrensschritt S6 anhand dieser Parameter überprüft, ob sich die Brennkraftmaschine im Leerlaufbetrieb befindet. Ist dies nicht der Fall,so werden die Schritte S5 und S6 wiederholt ausgeführt.
Ist die Abfrage im Verfahrensschritt S6 aber positiv, d.h. die Brennkraftmaschine ist in den Leerlaufbetrieb eingetreten, so wird im Verfahrensschritt S7 ein Zeitzähler Z3 für die Zeitdauer TWAIT gestartet. Um mögliche Fehldiagnosen durch zu große Drehzahlschwankungen auszuschließen, muß während der Zeit TWAIT die Drehzahl N der Brennkraftmaschine innerhalb bestimmter Grenzwerte NMIN und NMAX liegen. Ist die Drehzahl innerhalb der Zeit TWAIT noch nicht stabil genug, schwankt sie zum Beispiel mehr als um 50 Umdrehungen pro Minute, so wird der Zeitzähler Z3 erneut gestartet und die Drehzahl N wieder dabei überwacht. Befindet sich die Brennkraftmaschine aber in einem stabilen Leerlaufbetrieb, so wird im Verfahrensschritt S9 abgefragt, ob die vorgegebene Anzahl Z1MAX von Diagnosen schon durchgeführt wurde. Ist dies nicht der Fall, so wird im Verfahrensschritt S10 abgefragt, ob der Zählerstand Z2MAX schon erreicht ist, obwohl die vorgegebene maximale Anzahl von Diagnosen Z1MAX noch nicht erreicht wurde.
Das Abgasrückführungssystem wird nämlich auch als in Ordnung angesehen (S20), wenn gleich die ersten Z2max Überprüfungen zu einem positiven Ergebnis führten. Die verbleibende Anzahl (Z1MAX - Z2MAX) Überprüfungen werden dann aus Zeitersparnis (Einsparung an Rechnerleistung) gar nicht mehr durchgeführt. Ist auch der Wert Z2MAX noch nicht erreicht, so wird im Verfahrensschritt S11 eine mittlere Drehzahl NM ermittelt, die während der Zeit TWAIT innerhalb der Grenzen NMIN und NMAX aufgetreten ist. Anschließend wird im Verfahrensschritt S12 ein weiterer Zeitzähler Z4 für die Zeitdauer TDIAG gestartet und gleichzeitig das AGR-Ventil 20 (Figur 1) mit einem bestimmten Diagnose-Tastverhältnis TVDIAG angesteuert (Schritt S13).
Da im Regelfall die Abgasrückführung im Leerlaufbetrieb abgeschaltet ist, -da ohnehin in dieser Betriebsweise praktisch keine NOₓ-Emissionen entstehen-, wird zur Diagnose des AGR-Systems das AGR-Ventil mit dem Tastverhältnis TVDIAG angesteuert. Um keine zu großen Drehzahländerungen und damit Einbußen an Komfort in Kauf nehmen zu müssen, wird das AGR-Ventil nur teilweise geöffnet, das Tastverhältnis also klein gehalten. Hat aber bereits im Leerlauf-Betrieb der Brennkraftmaschine eine geringe Abgasrückführung stattgefunden, so wird zur Diagnose des AGR-Systems das Tastverhältnis für das AGR-Ventil um das Diagnosetastverhältnis TVDIAG erhöht.

Während der Abgasrückführung in der Zeit TDIAG wird die Drehzahl N der Brennkraftmaschine überwacht. Aufgrund der Abgasrückführung erhalten die Zylinder der Brennkraftmaschine eine geringere Füllung mit stöchiometrischem Kraftstoff-Luft-Gemisch. Da durch den relativ hohen Restgasanteil im Brennraum das Gemisch nicht vollständig verbrennen kann, nimmt das Drehmoment und damit die Drehzahl der Brennkraftmaschine ab. Im Verfahrensschritt S14 wird die niedrigste Drehzahl NAGR ermittelt, die sich bei Ansteuerung des AGR-Ventils mit dem Diagnosetastverhältnis TVDIAG einstellt. Nach Ablauf der Zeit TDIAG wird das AGR-Ventil im Verfahrensschritt S15 entweder wieder vollständig geschlossen oder wenn vor der Diagnose schon eine geringe Abgasrückführung stattgefunden hat, auf den Vorsteuerwert zurückgesetzt. Anschließend wird die Differenz von mittlerer Drehzahl NM bei Leerlaufbetrieb und niedrigster Drehzahl NAGR bei Abgasrückführungsbetrieb gebildet und mit einem Drehzahlgrenzwert NGW bei Abgasrückführung verglichen (Schritt 16). Ist diese Differenz größer als der Grenzwert NGW, so wird nach dieser ersten Überprüfung der vorgegebenen Anzahl von höchstens insgesamt Z1MAX-Überprüfungen im Verfahrensschritt S17 deshalb sowohl der Diagnosezähler Z1 als auch der Ergebniszähler Z2 inkrementiert. Wenn die Abfrage in Schritt S16 zu einem negativen Ergebnis führt, d.h. kein Drehzahleinbruch aufgrund des rückgeführten Abgases festgestellt werden kann, so wird zumindest für diese erste Überprüfung ein Defekt im Abgasrückführungssystem vermutet. Dabei kann entweder das Abgasrückführungsventil selbst defekt sein (läßt sich nicht mehr öffnen) oder die Abgasrückführungsleitung ist gequetscht oder gebrochen, so daß trotz geöffnetem Abgasrückführventil kein Abgasstrom in den Ansaugkanal gelangen kann. In diesem Fall wird im Verfahrensschritt S18 nur der Diagnosezähler Z1 inkrementiert.

Da nach den Verfahrensschritten S17 bzw. S18 der erste Durchlauf des Überprüfungszyklus abgeschlossen ist, wird der nächste Durchlauf bei Verfahrensschritt S3 wieder gestartet. Diese Schleife (Verfahrensschritte S3 bis S17 bzw. S18) wird so oft durchlaufen, bis entweder die Abfrage im Schritt S9 oder die Abfrage im Schritt S10 ein positives Ergebnis liefert. Dies ist bei der Abfrage im Schritt S9 dann der Fall, wenn die vorgegebene Anzahl Z1MAX von Überprüfungen des Abgasrückführungssystems erreicht wurde. Dann wird im Verfahrensschritt S19 abgefragt, ob innerhalb der Anzahl von Z1MAX-Überprüfungen mindestens eine Anzahl Z2MAX-Überprüfungen zu einem positiven Ergebnis geführt haben (z.B. drei von fünf durchgeführten Überprüfungen hatten einen Drehzahleinbruch zur Folge). Ist also der Zählerstand des Ergebniszählers größer oder gleich des Maximalwertes Z2MAX (Schritt S20), so wird insgesamt auf ein intaktes Abgasrückführungssystem geschlossen und der Überprüfungszyklus ist beendet. Anderenfalls wird das Abgasrückführungssystem als Defekt eingestuft und es erfolgt ein Eintrag in einen Fehlerspeicher und/oder eine Fehlermeldung (Schritt S21).

Ist die maximale Zahl von Überprüfungen Z1MAX noch nicht erreicht, aber innerhalb der bereits durchgeführten Überprüfungen schon der Maximalwert Z2MAX erreicht(zB. die ersten 3 von 5 Überprüfungen führten bereits zu einem positiven Ergebnis), so folgt unmittelbar der Schritt S20.

Ein Überprüfungszyklus, der beispielsweise aus fünf hinter einander ablaufenden Überprüfungen besteht (Z1MAX=5), ist nicht an eine Leerlaufphase gebunden, sondern kann auch auf mehrere Leerlaufphasen verteilt sein.

## Patentansprüche

1. Verfahren zur Diagnose eines Abgasrückführungssystems einer Brennkraftmaschine (10)
- mit einem zur Steuerung des Offen- und Schließzustandes eines Abgasrückführungskanals (19) dienenden Abgasrückführventil (20),
- wobei Motorbetriebsparameter erfaßt und gespeichert werden, wenn der Abgasrückführungskanal (19) geschlossen und geöffnet ist,
- Differenzwerte zwischen den Motorbetriebsparametern und gespeicherten Werten gebildet werden,
- diese Differenzwerte mit vorbestimmten Werten verglichen werden, um Störungen des Abgasrückführungssystems zu erfassen,
**dadurch gekennzeichnet,**
- daß als Motorbetriebsparameter die Drehzahl (N) im Leerlaufbetrieb der Brennkraftmaschine (10) herangezogen wird.

2. Verfahren nach Anspruch 1, dadurch gekennzeichnet, daß
- während des Leerlaufbetriebes der Brennkraftmaschine(10) eine mittlere Drehzahl (NM) erfaßt wird,
- das Abgasrückführventil (20) für eine bestimmte Diagnosezeit (TDIAG) mit einem Diagnosetastverhältnis (TVDIAG) angesteuert wird,
- eine sich dabei einstellende, minimale Drehzahl (NAGR) ermittelt und die Differenz zwischen der mittleren Drehzahl (NM) und dieser minimalen Drehzahl (NAGR) bei Ansteuerung des Abgasrückführungventils (20) gebildet wird,
- diese Differenz (NM - NAGR) mit einem vorgegebenen Grenzwert (NGW) verglichen wird und
- in Abhängigkeit vom Ergebnis dieses Vergleiches das Abgasrückführungssystem hinsichtlich seiner Funktionsfähigkeit bewertet wird.

3. Verfahren nach Anspruch 2, dadurch gekennzeichnet, daß das Abgasrückführungssystem dann als korrekt arbeitend eingestuft wird, wenn eine vorgebbare Anzahl (Z2MAX) von insgesamt einer vorgebbaren Anzahl (Z1MAX) hintereinander durchzuführenden Überprüfungen ergibt, daß die Differenz (NM - NAGR) größer ist als der Grenzwert (NGW), andernfalls eine Fehlermeldung ausgeben wird.

4. Verfahren nach Anspruch 3, dadurch gekennzeichnet, daß die Anzahl (Z1MAX) der insgesamt hintereinander durchzuführenden Überprüfungen innerhalb einer Leerlaufphase der Brennkraftmaschine (10)liegen.

5. Verfahren nach Anspruch 3, dadurch gekennzeichnet, daß die Anzahl (Z1MAX) der insgesamt hintereinander durchzuführenden Überprüfungen auf mehrere Leerlaufphasen der Brennkraftmaschine (10) verteilt sind.

6. Verfahren nach Anspruch 2, dadurch gekennzeichnet, daß die mittlere Drehzahl (NM) erst dann erfaßt wird, wenn sich die Drehzahl (N) im Leerlauf während einer vorgebbaren Zeit (TWAIT) innerhalb einer wählbaren Bandbreite (NMIN, NMAX) bewegt.

7. Verfahren nach Anspruch 2, dadurch gekennzeichnet, daß das Diagnosetastverhältnis (TVDIAG) in bezug auf das Tastverhältnis bei aktiver Abgasrückführung klein gezählt ist.

8. Verfahren nach Anspruch 2, dadurch gekennzeichnet, daß das Abgasrückführventil (20) ohne Änderungsbegrenzung für das Diagnosetastverhältnis (TVDIAG) angesteuert und zurückgesetzt wird.
